# EUROPEAN PATENT SPECIFICATION

(11) **EP 0 412 133 B1**
(45) Date of publication and mention of the grant of the patent: **08.12.1993**
(21) Application number: 90900575.3
(22) Date of filing: 16.11.1989
(51) Int. Cl.: B60K 1/02, B62B 7/00

(54) **POWERED WHEELCHAIR HAVING TRANSVERSELY MOUNTED DRIVE MECHANISM**
MOTORKRANKENFAHRSTUHL MIT QUER ANGEORDNETEM ANTRIEBSMECHANISMUS
FAUTEUIL ROULANT A MOTEUR, A MECANISME D'ENTRAINEMENT TRANSVERSAL

(30) Priority: 17.11.1988 US 272645
(43) Date of publication of application: 13.02.1991
(73) Proprietor: INVACARE CORPORATION, Elyria, Ohio 44036 (US)
(72) Inventor: RICHEY, Joseph, B., Shaker Heights, OH 44112 (US); WAKEFIELD, Theodore, C., Vermilion, OH 44089 (US); WAINSCOTT, Alan, D., Avon Lake, OH 44012 (US)
(74) Representative: Jones, Colin
(86) International application number: US8905271
(87) International publication number: WO9005649

(56) References cited:
- EP-A- 0 339 500
- DE-A- 3 306 908
- GB-A- 1 518 349
- US-A- 2 586 273
- US-A- 3 100 547
- US-A- 3 247 736
- US-A- 3 521 722
- US-A- 4 037 676
- US-A- 4 323 133
- US-A- 4 431 076
- US-A- 4 768 536
- US-A- 4 805 711
- US-A- 4 834 409
- Evoloid Gearing Brochure, November 1978, "Designs for improved cost effectiveness", pages 1, 3, 5
- The Bounder Catalogue, 15 August 1988, 21st Century Scientific Inc., "Power Wheelchair"

## Description

### Background of the Invention

This invention pertains to wheelchairs, and more particularly, to powered wheelchairs. The invention is particularly applicable to battery powered wheelchairs and will be described with particular reference thereto. The invention has broader applications and may be advantageously employed in related powered wheelchairs and not restricted to the particular embodiment described.

Present day wheelchair manufacturers all employ substantially the same type of drive mechanism for battery powered wheelchairs. Specifically, suitable connections are made between the battery and first and second drive motors. The drive motors are positioned generally parallel to side frames of the wheelchair. That is, output shafts of the drive motors are disposed substantially parallel to the side frames so that it is necessary to employ right angle gear boxes to transfer the output power of the drive motors to drive shaft and drive pulley arrangements. The driven wheels of the powered wheelchair are oriented for rotation in planes generally parallel to the side frames, i.e., rotation about axes substantially perpendicular to the side frames.

A primary reason for the "parallel" mounting of the drive motors is that development of powered wheelchairs evolved from motorizing unpowered, collapsible wheelchairs. The unpowered wheelchairs had developed to a stage in which the folding or collapsible nature was heavily emphasized for transport and storage reasons. Adapting drive motors to these wheelchairs restricted the drive motors to a parallel mounting arrangement because of the collapsible nature of the wheelchair. Wheelchair manufacturers became accustomed to this original mounting arrangement and continue to construct powered wheelchairs with a parallel mounting arrangement of the drive motors. In fact, the technological evolution of the powered wheelchairs, particularly the drive mechanism arrangement, has stagnated and resulted in concentration on other aspects of the wheelchair.

It is believed that another reason for this parallel mounting arrangement of the drive motors is aesthetics. That is, the drive motors may be more effectively "hidden" by mounting the motors in a parallel arrangement with the side frames. Also, in limited situations this arrangement of the drive motors would still permit partial collapsing of the wheelchair for ease of transportation.

Collapsing the wheelchair for ease of transportation, though, is not believed to be a viable reason for the industry's continued use of the parallel mounting of the drive motors. Since the typical powered wheelchair carries a battery, collapsing the powered wheelchair is not a primary concern. A rigid platform extends between the side frames to support the battery so that both the battery and platform would have to be removed from the wheelchair for collapsing. Thus, since a user would not contemplate repeated and ready folding of a powered wheelchair due to the cumbersome removal of the battery and platform, orientation of the drive motors is not a major factor in wheelchairs of this type.

Additionally, users of these powered wheelchairs are often quadriplegics or similarly disabled to the extent that the user and powered wheelchair are transported as a unit. Lifts are incorporated into vans, buses, etc.,and the entire wheelchair clamped into secure engagement. In other words, the user never leaves the wheelchair except for sleeping and other selected activities.

Disposition of the drive motors in the parallel mounting arrangement requires a right angle gear box as indicated above and which typically uses a worm and a worm gear. Worm gearing is oftentimes used because of the large speed reductions that result from the structural arrangement. There is a large amount of sliding that results in this type of gearing and thereby results in a loss of drive motor efficiency.

The sliding in a worm gear arrangement also has an impact on the overall efficiency of power transmission from the drive motor output shaft to the drive pulley. A substantial loss is realized in the right angle gear box. Beyond the heating and noise of the drive motors, the most significant characteristic of the inefficient transmission of power from the drive motor through the gear box and to the drive pulley is realized in the reduced range with a predetermined battery charge.

The use of a right angle gear box dictates that a manufacturer maintain an inventory of right-hand and left-hand right angle gear boxes to satisfy the original manufacture and replacement parts necessary with the parallel mounting arrangement. Although the right-hand and left-hand drive motors are substantially the same, the right and left gear boxes are different. In terms of ease of manufacture, storage and inventory, it would be highly desirable to employ a more universal arrangement.

As is also customary with powered wheelchairs of this type, the battery is often located toward the rear of the chair and at an area that is fully supported by the rear-driven wheels. In addition to the weight of a battery and wheelchair user, the drive motors constitute a substantial portion of the overall weight of the assembly. As alluded to above, the drive motors are secured to the side frames and oftentimes are mounted in such a manner that the center of gravity of the entire unit is disposed toward the rear of the wheelchair. Wheelchair manufacturers employ extensions from the rear of the frame that act as anti-tip mechanisms due to the rearward disposal of the center of gravity of the unit. On inclined surfaces, the rearward disposal of the center of gravity is more apparent since the smaller diameter front wheels have a greater tendency to be raised off the ground surface. It is thus oftentimes desirable to shift the center of gravity forwardly.

### Summary of the Invention

According to the present invention there is presented a powered wheelchair that overcomes all of the above-referred to problems and others and provides a vastly more efficient and dimensionally more stable arrangement.

DE-A- 3306908 discloses a powered wheelchair according to the preamble of claim 1 of the kind comprising a frame which supports a seat; first and second driven wheels secured to said frame at opposite sides of the seat for rotation about a common axis; third and fourth wheels rotatably secured to the frame; first and second drive motors secured to the frame so as to be disposed with their axes parallel to said common axis; and first and second drive means for transferring power from the drive motors to the respective driven wheels, each drive means including a rotary drive member, a transmission between the respective drive motor and the drive member and drive means between the drive member and the respective driven wheel, the axes of the drive members being co-axial and parallel to the motor axes.

In the wheelchair of DE-A- 3306908, the two motors are themselves axially aligned.

US-A- 3247736 discloses an involute gear combination of which a pinion has five teeth or fewer.

A powered wheelchair of the above-described kind is, in accordance with the invention characterised in that the first and second drive motors are disposed in parallel overlapping relationship and each transmission comprises a gear box having a drive pinion on the motor, which drive pinion has five teeth or fewer and meshes with a gear by means of which the respective drive member is rotated.

With the wheelchair according to the invention, there is no need to provide distinct right-hand and left-hand drive components.

A principal advantage of the wheelchair according to the invention resides in its increased efficiency.

Another advantage resides in the new centre of gravity which is obtainable by virtue of the transverse mounting of the drive motors.

Still another advantage of the wheelchair according to the invention is that the transversely mounted drive motors and their gear transmissions can be of a reversible nature.

A further advantage is realised in the reduced inventory that need be maintained.

### Brief Description of the Drawings

The invention may take physical form in certain parts and arrangements of parts, a preferred embodiment of which will be described in detail in this specification and illustrated in the accompanying drawings which form a part hereof, and wherein:
FIGURE 1 is a side elevational view of a powered wheelchair in accordance with the subject invention;
FIGURE 2 is an enlarged, side elevational view of the drive arrangement with the wheels of the wheelchair shown in phantom and particularly representing the shift of the center of gravity of the subject invention over the prior art arrangement;
FIGURE 3 is a perspective view of a transverse drive motor mounting arrangement in accordance with the subject invention;

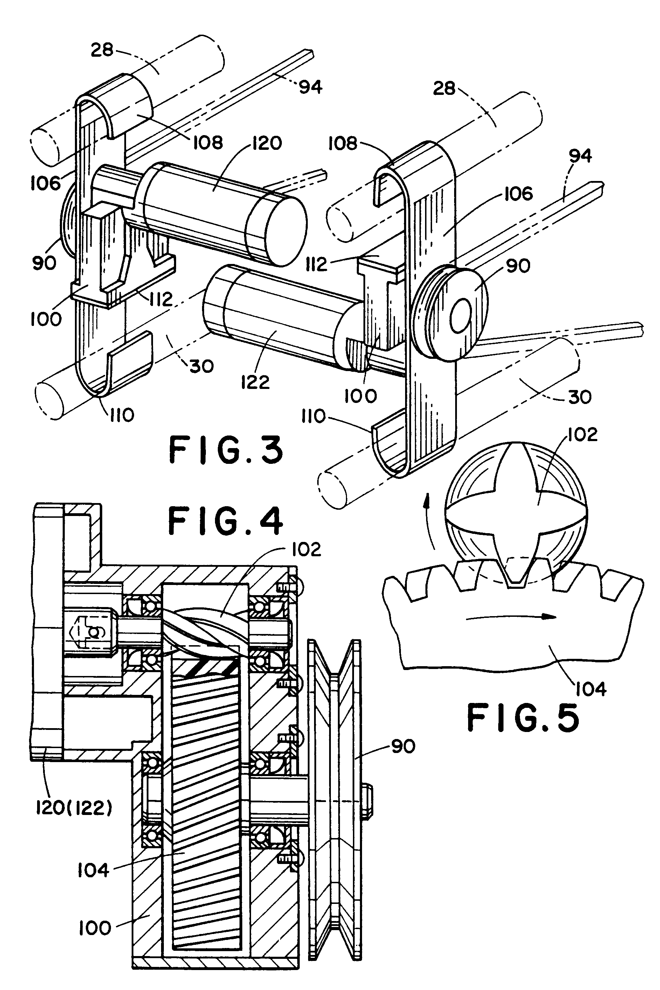

FIGURE 4 is a side elevational view with selected portions shown in cross-section of a pinion meshing with a gear in the gear box arrangement of the subject invention; and,
FIGURE 5 is a front elevational view of the pinion and gear arrangement shown in FIGURE 4.

### Detailed Description of the Preferred Embodiment

Referring now to the drawings wherein the showings are for purposes of illustrating the preferred embodiment of the invention only, and not for purposes of limiting same, a battery powered wheelchair A includes a seat assembly B, frame assembly C, and a drive means D.

The powered wheelchair seat assembly B is defined by a first or bottom seat portion 10 and a second or seat back portion 12. The seat assembly is commonly constructed from a padded vinyl material that is secured along peripheral edges to the frame assembly C. Still further, seat inserts may also be utilized with this type of construction to readily conform to the body shape of a particular user.

The frame assembly C is defined by a pair of side frames 16, 18. The side frames are substantially identical in construction so that description of one is equally applicable to the other unless specifically noted otherwise. For example, and with reference to side frame 16, first, second and third vertical frame members 20, 22, 24 are secured in spaced relation by first and second horizontal members 28, 30. A cross-brace frame structure (not shown) is disposed beneath the seat bottom portion 10 and maintains the first and second side frame assemblies 16, 18 in spaced, substantially parallel relationship. Replaceable arm support members 38, 40 are received on the side frame assemblies and incorporate padding thereon. Extending upwardly from the third vertical member 24 are rear canes 48, 50 that facilitate manual movement of a wheelchair. Likewise, extending from the second horizontal member 30 of the side frame assembly is an anti-tip assembly which will be described in further detail below.

The frame assembly is preferably formed from tubular members that are welded or otherwise secured together. The frame arrangement provides a lightweight yet durable arrangement that readily receives additional components thereon for adapting the wheelchair to the specialized needs of a particular user.

First and second large wheels 60, 62 are secured to the side frames in a manner that facilitates rotation about a common first axis 64. Conventional bearing assemblies provide for ease of rotation of each wheel 60, 62 relative to its respective side frame. Disposed forwardly from the first and second wheels are a pair of wheels 70, 72 of substantially smaller diameter. The small diameter wheels are secured to respective side frames through a swivel mounting 74, 76 that permits rotation through 360°. The small diameter wheels easily pivot in response to the drive torque applied to the wheels.

As is well known, regulating the power supplied to right and left drive motors controls the output torque for driving the wheels. If equal power is supplied to the drive motors the wheelchair will move forwardly and rearwardly generally in a straight path. Reducing the power to a selected motor causes the wheelchair to turn in that direction, and the motors may also be driven in reverse to facilitate turning, if desired. The electronics and motor control through toggle switch 78 are well known in the art so that further discussion is unnecessary to a full and complete understanding of the subject invention.

A footrest assembly 80, 82 may also be secured to the first vertical member of each side frame. Footrest assemblies of this type are commonly known.

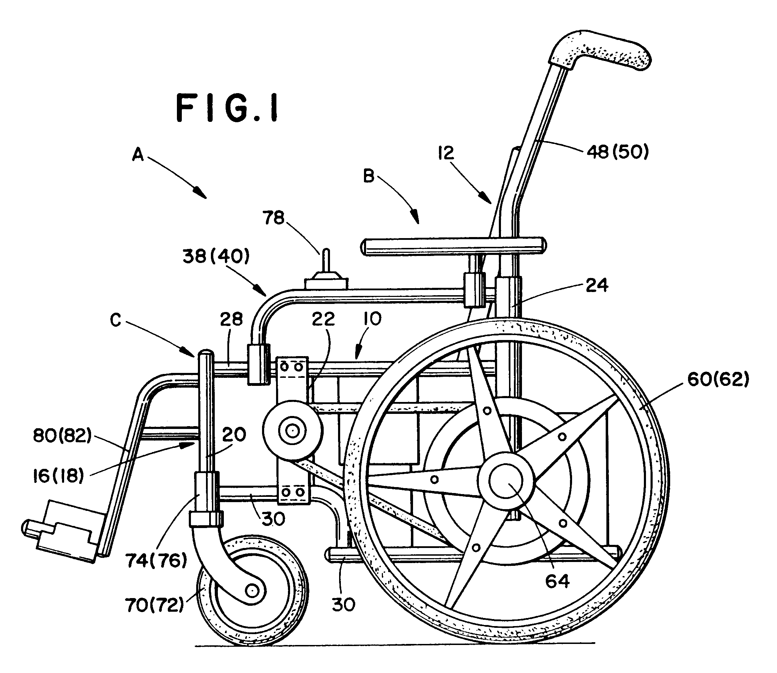

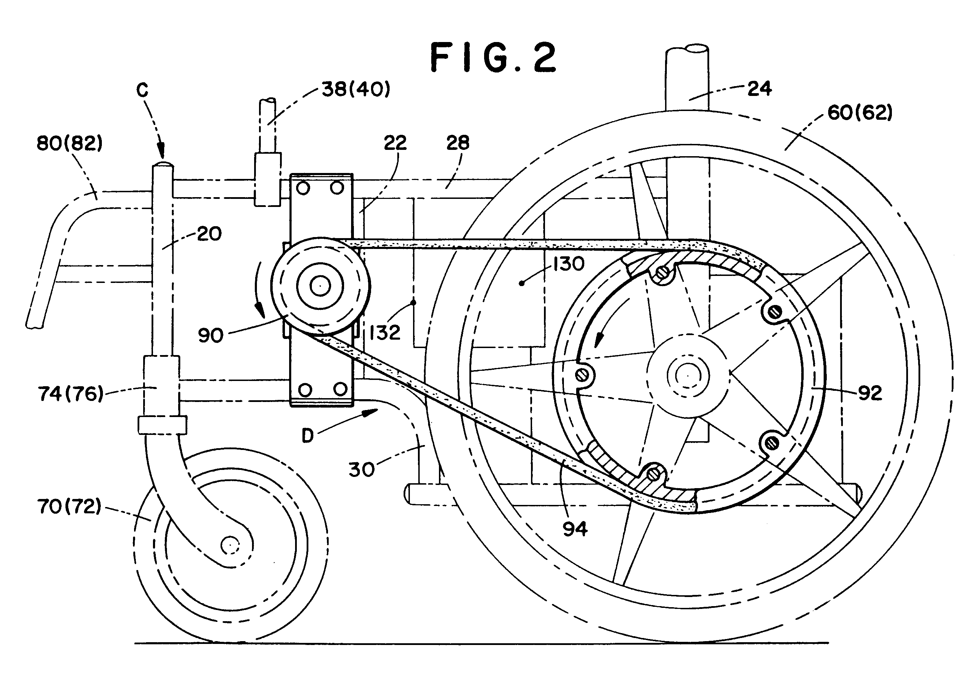

With continued reference to FIGURE 1 and additional reference to FIGURE 2, the general nature of the drive means D will be described in further detail. The right-hand and left-hand drive means are identical so that description of one is applicable to the other. Particularly, the drive means includes a drive pulley 90 operatively engaged with a driven pulley 92 secured to rear wheel 60 or 62. A drive belt 94 encompasses the two pulleys and transfers the rotational drive force of pulley 90 into driving movement of the wheel 60 or 62. This arrangement reliably transfers rotary motion from the small diameter drive pulley 90 to the larger diameter pulley 92. Again, this aspect of the drive means is well known in the art.

Since a transverse mounting arrangement of the drive motors is not limited by parameters of the powered wheelchair as discussed above, a more efficient drive motor and gear box arrangement can be utilized. As briefly described above, a largely inefficient arrangement has been utilized in the past to transfer power from the drive motors to the pulley 90. A more efficient arrangement has been sought for years without substantial success, chiefly as a result of the failure to weigh the resultant advantages relative to the disadvantages.

Reference may be made to US-A-3,247,736 which describes in detail one type of involute gear arrangement in which the pinion has a helical gear profile that provides a highly efficient transfer of power to a mating gear wheel. Other high efficiency gear arrangements requiring a transverse mounting arrangement may be utilized. With the particular high efficiency drive means the output shaft from the drive motor includes a drive pinion having a gear profile of five teeth or fewer. This pinion meshes with a helical gear wheel that has a rotational axis offset but parallel to the output shaft of the drive motor. The gear wheel is then suitably secured to the drive pulley so that rotation of the gear wheel is transferred through a common shaft to the drive pulley.

To incorporate a gear box 100 of this type in which a pinion 102 and helical gear wheel 104 effectively transfer power from the drive motor to the drive pulley with extremely high efficiency, it is necessary that the drive motor be transversely mounted relative to a respective side frame. As shown in FIGURE 3, a bracket 106 has opposed ends 108, 110 adapted for engagement with the horizontal members 28, 30 of the side frames. A reinforced platform 112 is defined on each bracket to cantilever mount the gear box 100 and drive motor 120 to the side frame assembly. The drive motor 120 is axially offset from the rotational axis of the drive pulley. According to the invention, the drive motors are mounted in spaced parallel relation beneath the seat bottom portion. The overlapping orientation of the drive motors permits a compact arrangement that facilitates adjustment of the spacing between the side frames. Although the motors are offset, the power transfer through the gear boxes is designed so the drive pulleys are coaxial. Specifically, the drive motor 120 has a gear box extending downwardly therefrom while the other drive motor 122 has a gear box extending upwardly for aligning the drive pulleys. The overlap mounting arrangement will permit the seat width to vary between 355.6 and 508 mm (fourteen (14) and twenty (20) inches) without the need of further alterations.

By merely reversing the current to the drive motor, drive motor 120 can be operated to produce a clockwise rotation and drive motor 122 a counter-clockwise rotation, or vice versa. This provides for coordination of the rear wheels for straight forward or rearward movement. As is well known in the art, a control mechanism such as the toggle switch 78 controls the amount and direction of current flow to the respective drive motors to enable a user to turn the wheelchair as desired.

Again with reference to FIGURE 2, the parallel, over/under transverse mounting arrangement of the drive motors transfers the center of gravity 130 of a typical prior art wheelchair to a forwardly disposed, lower center of gravity 132. This change of the center of gravity of the wheelchair is desirable since it is moved forwardly and downwardly toward the front wheels 70, 72. This limits the potential for tipping action of the wheelchair on an inclined surface and assures a more stable operation of the wheelchair.

Additionally, the wheelchair may be manually moved both forwardly and rearwardly even though the drive mechanism is fully engaged. As is conventionally known, a clutch mechanism may be incorporated adjacent the drive pulley to selectively engage and disengage the drive mechanism from the rotary output of the drive motor. Any kind of clutch arrangement could be utilized within the scope of the present invention. With the gear arrangement described above a clutch mechanism may be unnecessary since the gear arrangement is reversible.

In preliminary tests of the transverse drive motor arrangement relative to the prior art arrangement, the range data of a prior art chair incorporating a right angle gearbox was compared to the subject new chair incorporating the above-described gear box arrangement. The tests were conducted at full speed on a straight and level course on a hard surface. The following results were recorded.

| RANGE: | | |
|---|---|---|
| Subject Invention | Prior Art | Range Improvement |
| 36.8 km ± 7.2 (23 mi ± 4.5) | 16.6 km ± 3.7 (10.4 ± 2.3) | 121 % + 81-75 |

| WHEEL-OFF-THE-GROUND POWER DRAW: | |
|---|---|
| Prior Art #1 | 261 watts |
| Prior Art #2 | 413 watts |
| Prior Art #3 | 260 watts |
| Prior Art #4 | 200 watts |
| Subject Invention | 104 watts |

To summarize, increased range is realized with the new arrangement on a predetermined battery charge. The power draw is also substantially reduced as is heating of the drive motors.

## Claims

1. A powered wheelchair comprising a frame (C) which supports a seat (B); first and second driven wheels (60,62) secured to said frame (C) at opposite sides of the seat (B) for rotation about a common axis (64); third and fourth wheels (70,72) rotatably secured to the frame (C); first and second drive motors (120,122) secured to the frame (C) so as to be disposed with their axes parallel to said common axis (64); and first and second drive means for transferring power from the drive motors (120,122) to the respective driven wheels (70,72), each drive means including a rotary drive member (90), a transmission between the respective drive motor (120,122) and the drive member (90) and drive means (92,94) between the drive member (90) and the respective driven wheel (70,72), the axes of the drive members (90) being coaxial and parallel to the motor axes; characterised in that the first and second drive motors (120,122) are disposed in parallel overlapping relationship and each transmission comprises a gear box (100) having a drive pinion (102) on the motor (120 or 122), which drive pinion has five teeth or fewer and meshes with a gear (104) by means of which the respective drive member (90) is rotated.

2. A wheelchair as claimed in claim 1, in which said frame (C) comprises first and second side frames (16,18) extending in spaced, substantially parallel relationship on opposite sides of said seat (B), said first and second driven wheels (60,62) being operatively associated with said first and second side frames (16,18), respectively, and said first and second drive motors being mounted on said side frames (16,18).

3. A wheelchair as claimed in claim 2, further comprising first and second brackets (106) adapted for securing said first and second drive motors (120,122) to said first and second side frames (16,18) respectively.

4. A wheelchair as claimed in claim 1, 2 or 3, wherein said first and second drive motors (120,122) and the gear boxes (100) are reversible to facilitate manual movement of the wheelchair.

5. A wheelchair as claimed in claim 1, 2 or 3, further comprising clutch means for engaging and disengaging operative connection of said drive motors (120,122) from said first and second driven wheels (60,62).

6. A wheelchair as claimed in any preceding claim, in which each of said drive members (90) comprises a drive pulley and each of said drive means comprises a driven pulley (92) connected to the respective driven wheel (60 or 62) and a drive belt (94) between the drive and driven pulleys (90,92).

## Patentansprüche

1. Angetriebener Rollstuhl mit einem einen Sitz (B) tragenden Rahmen (C), einem ersten und zweiten an dem Rahmen (C) an entgegengesetzten Seiten des Sitzes (B) zur Drehung um eine gemeinsame Achse (64) gehalterten angetriebenen Rad (60, 62), einem drehbar an dem Rahmen (C) befestigten dritten und vierten Rad (70, 72), einem ersten und zweiten derart an dem Rahmen (C) befestigten Antriebsmotor (120, 122), daß sie mit ihren Achsen parallel zu der gemeinsamen Achse (64) angeordnet sind, und ersten und zweiten Antriebsmitteln zum Übertragen der Leistung von den Antriebsmotoren (120, 122) auf die jeweiligen angetriebenen Räder (70, 72), wobei jedes Antriebsmittel ein rotierendes Antriebselement (90), eine Übertragung zwischen dem jeweiligen Antriebsmotor (120, 122) und dem Antriebselement (90) und Antriebsmittel (92, 94) zwischen dem Antriebselement (90) und dem jeweiligen angetriebenen Rad (70, 72) aufweist und die Achsen der Antriebselemente (90) koaxial und parallel zu den Motorachsen verlaufen, dadurch gekennzeichnet, daß der erste und zweite Antriebsmotor (120, 122) parallel überlappend angeordnet ist und jede Übertragung ein Getriebe (100) mit einem Antriebsritzel (102) an dem Motor (120 oder 122) aufweist, welches Antriebritzel fünf Zähne oder weniger aufweist und mit einem Getriebeelement (104) kämmt, mit dessen Hilfe das entsprechende Antriebselement (90) rotiert wird.

2. Rollstuhl nach Anspruch 1, bei dem der Rahmen (C) einen ersten und zweiten Seitenrahmen (16, 18) aufweist, die sich auf gegenüberliegenden Seiten des Sitzes (B) mit Abstand im wesentlichen parallel erstrecken, das erste und zweite angetriebene Rad (60, 62) dem ersten bzw. zweiten Seitenrahmen (16, 18) wirkzugeordnet ist und der erste und zweite Antriebsmotor an den Seitenrahmen (16, 18) befestigt ist.

3. Rollstuhl nach Anspruch 2, weiterhin enthaltend eine erste und zweite Klammer (106), die zur Befestigung des ersten und zweiten Antriebsmotors (120, 122) an dem ersten bzw. zweiten Seitenrahmen (16, 18) ausgebildet sind.

4. Rollstuhl nach Anspruch 1, 2 oder 3, bei dem der erste und zweite Antriebsmotor (120, 122) und die Getriebe (100) zur Erleichterung der manuellen Bewegung des Rollstuhls umkehrbar sind.

5. Rollstuhl nach Anspruch 1, 2 oder 3, weiterhin enthaltend Kupplungsmittel zur Herstellung und Aufhebung einer Betriebsverbindung der Antriebsmotoren (120, 122) mit dem ersten bzw. zweiten angetriebenen Rad (60, 62).

6. Rollstuhl nach einem der vorhergehenden Ansprüche, bei dem jedes der Antriebselemente (90) eine Antriebsriemenscheibe und jedes der Antriebsmittel eine mit dem jeweiligen angetriebenen Rad (60 oder 62) verbundene angetriebene Riemenscheibe (92) und einen Antriebsriemen (94) zwischen der Antriebsriemenscheibe und der angetriebenen Riemenscheibe (90, 92) aufweist.

## Revendications

1. Fauteuil roulant motorisé comprenant un châssis (C) qui supporte un siège (B), des première et deuxième roues entraînées (60, 62) fixées à ce châssis (C) sur des côtés opposés du siège (B) pour tourner autour d'un axe commun (64), des troisième et quatrième roues (70, 72) fixées tournantes au châssis (C), des premier et second moteurs de propulsion (120, 122) fixés au châssis (C) de façon que leurs axes soient parallèles à l'axe commun (64), et des premier et second moyens d'entraînement pour la transmission d'énergie des moteurs de propulsion (120, 122) aux roues entraînées respectives (60, 62), chaque moyen d'entraînement comportant un élément menant rotatif (90), une transmission entre le moteur de propulsion respectif (120, 122) et l'élément menant (90) et des moyens d'entraînement (92, 94) entre l'élément menant (90) et la roue entraînée respective (60, 62), les axes des éléments menants (90) étant confondus et parallèles aux axes des moteurs, caractérisé par le fait que les premier et second moteurs de propulsion (120, 122) sont placés parallèlement et chevauchants et chaque transmission comprend une boîte d'engrenage (100) ayant un pignon menant (102) monté sur le moteur (120 ou 122), lequel pignon a cinq dents ou moins et engrène avec une roue dentée (104) qui fait tourner l'élément menant (90) respectif.

2. Fauteuil roulant selon la revendication 1, dans lequel le châssis (C) comprend des premier et second cadres latéraux (16, 18) espacés et sensiblement parallèles placés sur des côtés opposés du siège (B), les premier et deuxième roues entraînées (60, 62) étant associées fonctionnellement à ces premier et second cadres latéraux (16, 18), et les premier et second moteurs de propulsion étant montés sur ces cadres latéraux (16, 18).

3. Fauteuil roulant selon la revendication 2, comprenant en outre des premier et second supports (106) destinés à la fixation des premier et second moteurs de propulsions (120, 122) aux premier et second cadres latéraux (16, 18).

4. Fauteuil roulant selon l'une des revendications 1, 2 et 3, dans lequel les premier et second moteurs de propulsion (120, 122) et les boîtes d'engrenages (100) sont réversibles pour faciliter le déplacement du fauteuil.

5. Fauteuil roulant selon l'une des revendications 1, 2 et 3, comprenant en outre des moyens d'embrayage pour l'accouplement des moteurs de propulsion (120, 122) aux première et deuxième roues entraînées (60, 62) et le désaccouplement de ceux-ci de celles-ci.

6. Fauteuil roulant selon l'une des revendications précédentes, dans lequel chacun des éléments menants (90) comprend une poulie menante et chacun des moyens d'entraînement comprend une poulie menée (92) jointe à la roue entraînée associée (60 ou 62) et une courroie de transmission (94) placée entre les poules menante et menée (90, 92).
